# EUROPÄISCHE PATENTSCHRIFT

(11) **EP 2 527 143 B1**
(45) Veröffentlichungstag und Bekanntmachung des Hinweises auf die Patenterteilung: **18.06.2014**
(21) Anmeldenummer: 12169043.2
(22) Anmeldetag: 23.05.2012
(51) Int. Cl.: B32B 37/00, B32B 37/10, B32B 38/18, B29C 63/00, B29C 63/02, B32B 37/12, B29L 31/30

(54) **Verfahren und Vorrichtung zum Vorfixieren eines Kaschierstoffes auf einer Bauteiloberfläche**
Method and device for pre-fixing a laminated fabric to the surface of a component
Procédé et dispositif de préfixation d'une matière contrecollée sur une surface de composant

(30) Priorität: 24.05.2011 DE 102011102995
(43) Veröffentlichungstag der Anmeldung: 28.11.2012
(73) Patentinhaber: Greidenweis Maschinenbau GmbH, 78549 Spaichingen (DE)
(72) Erfinder: Greidenweis, Michael, 78549 Spaichingen (DE)
(74) Vertreter: Patentanwälte Westphal, Mussgnug & Partner

(56) Entgegenhaltungen:
- AT-U1- 6 733
- DE-A1-102006 003 423
- DE-A1-102007 040 879
- DE-A1-102010 037 177
- US-A- 5 435 883
- US-B1- 6 210 509
- FRIMO Freilassing GmbH [DE]: "Technologien für Oberflächen aus Leder / Kunstleder", , Mai 2009 (2009-05), XP002681212, Gefunden im Internet: URL:http://www.frimo.com/downloads/datenbl aetter_deutsch/leder_de.pdf [gefunden am 2012-08-02]

## Beschreibung

Die vorliegende Erfindung betrifft ein Verfahren zum Vorfixieren eines Kaschierstoffes auf mindestens einem Oberflächenabschnitt einer Bauteiloberfläche, insbesondere eines Innenverkleidungsbauteils für ein Kraftfahrzeug, mit den Merkmalen des Oberbegriffs des Anspruchs 1 sowie eine Vorrichtung zum Vorfixieren eines Kaschierstoffes auf dem mindestens einen Oberflächenabschnitt des Bauteils mit den Merkmalen des Oberbegriffs des Anspruchs 4.

Innenverkleidungsbauteile für Kraftfahrzeuge werden heute in der Regel aus Kunststoff gefertigt und besitzen häufig eine mehrschichtige Struktur aus mindestens einem Trägerbauteil und einer Oberflächenschicht. Es handelt sich dabei meist um spritzgegossene Kunststoffbauteile, bei denen als Oberflächenschicht oder Dekorschicht häufig Formhäute, Gewebe, Textilstoffe, Leder oder Kunstleder eingesetzt werden. Hierzu kann der Kaschierstoff in ein Produktionswerkzeug eingelegt und dort mit einem schmelzflüssigen Kunststoffmaterial hinterformt werden. Insbesondere bei Instrumententafeln ist es üblich, dass der Kunststoffträger und das Dekormaterial in einem vorherigen Arbeitsschritt vorgefertigt werden, um dann zusammen in ein Schäumwerkzeug eingelegt zu werden und mit einem aufschäumenden Kunststoff hinterschäumt bzw. miteinander verbunden zu werden.

Nachteilig bei diesem Verfahren ist, dass das Kunststoffmaterial im schmelzflüssigen Zustand verarbeitet wird, sodass der Kaschierstoff einer starken thermischen Belastung ausgesetzt ist. Dies kann dazu führen, dass Haptik und Optik der Oberflächenschicht leidet.

Alternativ zu dem vorgenannten Verfahren wird daher insbesondere bei empfindlichen Materialien seit vielen Jahren die sogenannte Kaschiertechnik verwendet. Dabei wird zunächst das Bauteil in einem separaten Arbeitsgang hergestellt und danach wird die Oberfläche des Bauteils oder ein Oberflächenabschnitt des Bauteils mit einem Kaschierstoff kaschiert. Dabei wird zunächst die Rückseite des Kaschierstoffs oder die Bauteiloberfläche mit einem geeigneten Klebstoffsystem behandelt. Anschließend wird der Kaschierstoff auf die Oberfläche oder mindestens einen Teilbereich der Oberfläche des vorab hergestellten Bauteils aufgebracht und darauf fixiert.

Derartige Kaschierverfahren werden beispielsweise in der DE 2 925 500 A1, der DE 10 2007 040 879 A1, der AT 006733 U1 und der DE 10 2005 042 819 A1 beschrieben.

Ein Nachteil der bekannten Verfahren besteht darin, dass insbesondere bei kompliziert geformten Bauteilen das Ausrichten des Kaschierstoffes häufig mit Problemen verbunden ist. Da das Ausrichten des Kaschierstoffes auf der Bauteiloberfläche in der Regel von Hand erfolgt, ist dieses Verfahren per se schon relativ arbeitsaufwändig. Hinzu kommt, dass die Handarbeit zusätzliche Fehlerquellen beinhaltet, insbesondere dann, wenn der Kaschierstoff besonderen Formkonturen des Bauteils angepasst werden muss oder wenn beispielsweise für Nähte im Kaschierstoff bestimmte Positionen auf der Bauteiloberfläche vorgesehen sind. Hier besteht immer die Gefahr, dass durch ein Verrutschen des Kaschierstoffes der haptische und optische Eindruck des kaschierten Bereiches in Mitleidenschaft gezogen wird.

Aufgabe der vorliegenden Erfindung ist es, ein Verfahren und eine Vorrichtung anzubieten, die Vorteile gegenüber dem Stand der Technik aufweisen.

Gelöst wird die Aufgabe durch ein Verfahren mit den Merkmalen des Anspruchs 1 sowie einer Vorrichtung mit den Merkmalen des Anspruchs 4.

Vorteilhafte Ausgestaltungen und Weiterentwicklungen des Verfahrens sowie der Vorrichtung sind Gegenstand der entsprechenden Unteransprüche.

Die dem erfindungsgemäßen Verfahren zugrunde liegende Idee besteht darin, schon beim Vorfixieren eines Kaschierstoffes auf mindestens einem Oberflächenabschnitt eines auf einer Bauteilaufnahme angeordneten Bauteils die Position des Kaschierstoffes zu sichern und ein ungewolltes Verschieben des Kaschierstoffes auf der Bauteiloberfläche zu vermeiden. Dabei wird in einem ersten Schritt der zugeschnittene Kaschierstoff auf dem mindestens einen zu kaschierenden Oberflächenabschnitt des Bauteils aufgelegt und grob ausgerichtet. Bei diesem Verfahrensschritt ist zwischen dem Kaschierstoff und der Bauteiloberfläche bereits eine nicht aktivierte Klebeschicht vorgesehen, die vorher entweder auf der Bauteiloberfläche oder auf der Rückseite des Kaschierstoffes aufgebracht wird.

In einem zweiten Schritt wird ein Nahtschwert auf den Kaschierstoff aufgebracht und der Kaschierstoff wird mit Hilfe des Nahtschwertes unter geringem Anpressdruck angedrückt, sodass weiterhin ein Verschieben des Kaschierstoffes möglich ist.

In einem dritten Schritt erfolgt das Feinausrichten des Kaschierstoffes von Hand. Danach wird der Kaschierstoff durch Erhöhen des Anpressdruckes des Nahtschwertes gespannt und das Vorfixieren des Kaschierstoffes wird in einem letzten Schritt durch Ausbilden einer haftenden Verbindung zwischen dem Kaschierstoff und der Bauteiloberfläche durch Aktivieren der Klebeschicht vorfixiert.

Der Vorteil gegenüber dem Stand der Technik besteht im Wesentlichen nun darin, dass das Nahtschwert im ersten Verfahrensschritt während des Auflegens und Grobausrichtens des zugeschnittenen Kaschierstoffes versetzt von der Bauteilaufnahme angeordnet ist und erst im zweiten Schritt mit einer Schwenkbewegung mittels eines ebenfalls versetzt von der Bauteilaufnahme angeordneten Schwenkarms auf den auf dem Oberflächenabschnitt aufliegenden Kaschierstoff aufgebracht wird. Auf diese Weise ist der Bereich oberhalb der Bauteilaufnahme frei zugänglich zum Auflegen, Grobausrichten und Feinausrichten des Kaschierstoffes, wodurch diese Tätigkeiten enorm erleichtert werden.

Ein weiterer Vorteil gegenüber dem Stand der Technik besteht darin, dass das Nahtschwert mit unterschiedlichen Druckstufen belegbar ist, sodass der Kaschierstoff zum Feinausrichten leicht auf der Bauteiloberfläche angedrückt wird, wobei weiterhin ein gezieltes Verschieben des Kaschierstoffes möglich ist, während ein ungewolltes Verrutschen des Kaschierstoffes unmöglich gemacht oder zumindest erschwert wird. In einer zweiten Druckstufe wird der fein ausgerichtete Kaschierstoff unter erhöhtem Druck gespannt, um anschließend durch Ausbilden einer haftenden Verbindung zwischen dem Kaschierstoff und der Bauteiloberfläche vorfixiert zu werden.

Als Kaschierstoff können die insbesondere für Innenverkleidungsbauteile für Kraftfahrzeuge üblichen Materialien aus der Gruppe Leder, Kunststofffolie, Gewebe, Textil und Kunstleder eingesetzt werden, wobei bei dem erfindungsgemäßen Verfahren Kaschierstoffe mit oder ohne Naht eingesetzt werden können.

Die Aktivierung der Klebeschicht erfolgt in einer vorteilhaften Ausgestaltung der vorliegenden Erfindung durch Wärmezufuhr, wobei als Klebeschicht ein durch Wärme aktivierbarer Kleber vorgesehen ist, der vor dem Auflegen des Kaschierstoffes auf dem mindestens einen Oberflächenabschnitt der Oberfläche des Bauteils entweder auf die Oberfläche des Bauteils oder die Rückseite des Kaschierstoffes aufgebracht wird.

Gegenstand der vorliegenden Erfindung ist auch eine Vorrichtung zum Vorfixieren eines Kaschierstoffes auf mindestens einem Oberflächenabschnitt eines auf einer Bauteilaufnahme angeordneten Bauteils, insbesondere eines Innenverkleidungsbauteils für ein Kraftfahrzeug. Die erfindungsgemäße Vorrichtung umfasst eine auf einer Grundplatte angeordnete Bauteilaufnahme, ein mit Druck belegbares Nahtschwert sowie Mittel zum Aufbringen des Nahtschwertes auf den auf dem Bauteil aufliegenden Kaschierstoff.

Die Mittel zum Aufbringen des Nahtschwertes auf den auf dem Bauteil aufliegenden Kaschierstoff umfassen einen Schwenkarm, an dem das Nahtschwert angeordnet ist, wobei das Nahtschwert, das mit unterschiedlichen Druckstufen belegbar ist, mit einer Schwenkbewegung auf den auf dem Bauteil aufliegenden Kaschierstoff aufgebracht wird.

Die Mittel zum Aufbringen des Nahtschwertes auf den Kaschierstoff umfassen zusätzlich einen Ständer, an dem der Schwenkarm über eine in einer Lagerung gelagerte Lagerwelle schwenkbar angeordnet ist.

Die Mittel zum Aufbringen des Nahtschwertes auf den Kaschierstoff umfassen in einer vorteilhaften Ausgestaltung der vorliegenden Erfindung weiterhin einen an einem über einen Ausleger mit der Grundplatte verbundenen Halter angeordneten Schwenkzylinder, der mit dem Schwenkarm in Wirkverbindung steht.

Eine vorteilhafte Ausführungsform der vorliegenden Erfindung sieht vor, dass an dem Halter Mittel zum Spannen des Kaschierstoffes vorgesehen sind, die einen Spannzylinder und einen Spannarm umfassen, wobei der Spannzylinder und der Spannarm beim Spannen des Kaschierstoffes in Wirkverbindung mit dem Nahtschwert sind bzw. treten. Die Aktivierung der Mittel zum Spannen des Kaschierstoffes erfolgt vorteilhaft über einen Schaltgriff, der leicht zugänglich am Nahtschwert angeordnet ist.

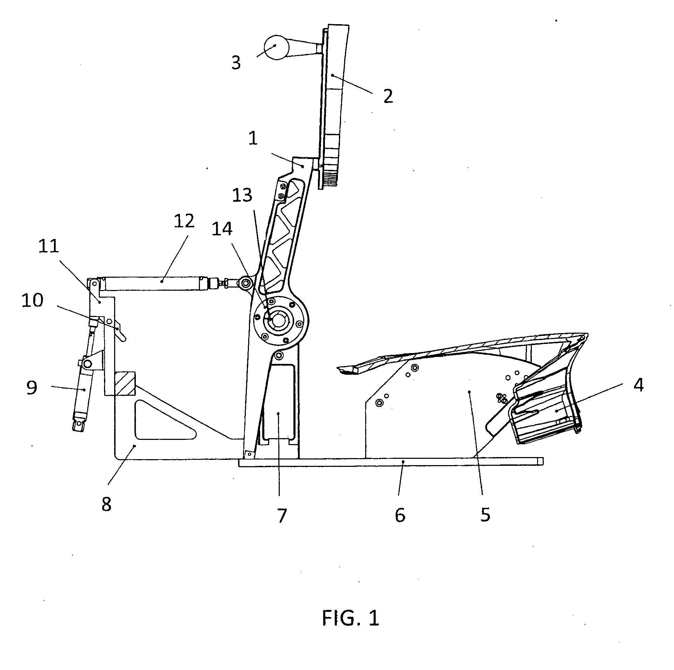

Die Erfindung wird im folgenden anhand eines Ausführungsbeispiels und entsprechenden Zeichnungen ausführlich erläutert. Dabei zeigen die Figuren 1 bis 3 jeweils in der gleichen Seitenansicht die erfindungsgemäße Vorrichtung zu unterschiedlichen Zeitpunkten des erfindungsgemäßen Verfahrens.

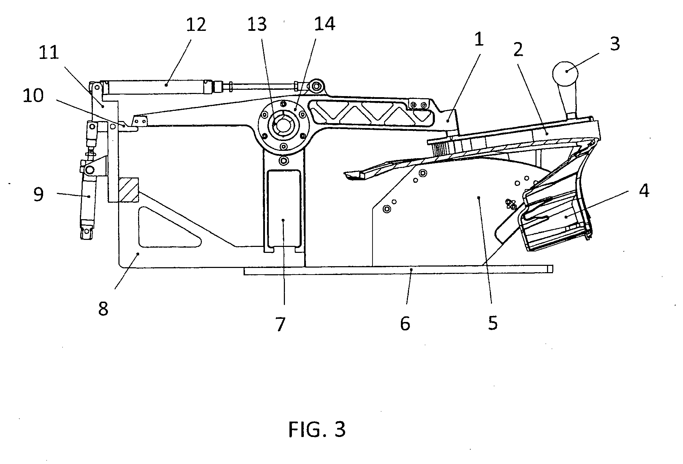

In der Figur 1 ist die Vorrichtung zum Vorfixieren eines Kaschierstoffes in der Seitenansicht zu sehen, wobei ein Bauteil 4 auf einer Bauteilaufnahme 5 angeordnet ist, die wiederum auf einer Grundplatte 6 befestigt ist. Versetzt von der Bauteilaufnahme 5 ist ebenfalls auf der Grundplatte ein Ständer 7 positioniert, an dem ein Schwenkarm 1 mit einer Lagerung 14 und einer Lagerwelle 13 schwenkbar gelagert ist. Am oberen Ende des Schwenkarms 1 ist ein Nahtschwert 2 mit einem Schaltgriff 3 angeordnet. Die Schwenkbewegung des Schwenkarms 1 erfolgt mittels eines Schwenkzylinders 12, der an einem Halter 11 angeordnet ist, der über einen Ausleger 8 mit der Grundplatte 6 verbunden ist. Darüber hinaus sind an dem Halter 11 ein Spannzylinder 9 und ein Spannarm 8 vorgesehen, deren Funktionsweise in der Figur 3 näher erläutert wird. Der in der Figur 1 dargestellte Zustand entspricht dem ersten Verfahrensschritt, bei dem das Nahtschwert 2 versetzt von der Bauteilaufnahme 5 angeordnet ist, sodass das Bauteil 4 frei zugänglich ist und der Kaschierstoff problemlos auf dem mindestens einen Oberflächenabschnitt des Bauteils, der kaschiert werden soll, aufgelegt und dort grob ausgerichtet werden kann.

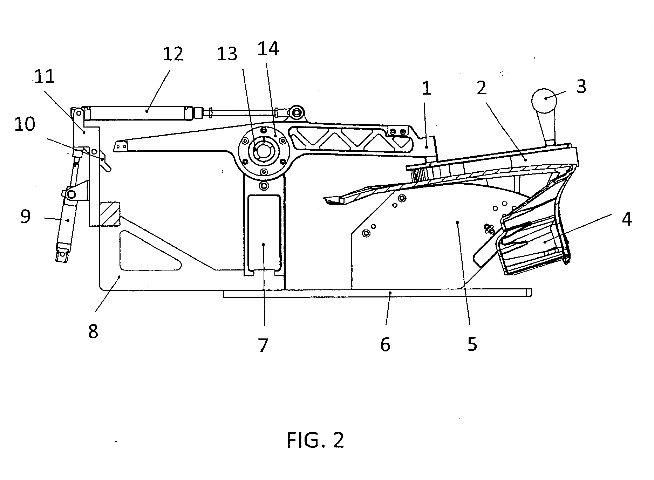

In der Figur 2 ist der nächste Verfahrensschritt zu sehen, bei dem das an dem Schwenkarm 1 angeordnete Nahtschwert 2 mit Hilfe des Schwenkzylinders 12 mit geringem Druck auf den Kaschierstoff aufgebracht wird. Dabei schwenkt der Schwenkarm 1 mit der Lagerung 14 um die Lagerwelle 13. Durch die Schwenkbewegung wird die rückwärtige Verlängerung des Schwenkarms 1 aus ihrer Ursprungsposition auf der Grundplatte 6 in eine Position in der Nähe des Halters 11 überführt. Der Auflagedruck des Nahtschwertes 2 ist bei diesem Verfahrensschritt gering genug, dass in dieser Situation ein Verschieben und damit ein Feinausrichten des Kaschierstoffes möglich ist.

In der Figur 3 wird das Spannen des Kaschierstoffes auf dem zu kaschierenden Oberflächenabschnitt des Bauteils dargestellt, wobei mittels des Spannzylinders 9 der Spannarm 10 von unten gegen den rückwärtigen Ausleger des Schwenkarms 1 gedrückt wird und diesen dabei hochdrückt, sodass das auf der gegenüberliegenden Seite des Schwenkarms angeordnete Nahtschwert 2 den Kaschierstoff unter erhöhtem Anpressdruck auf dem Bauteil 4 fixiert.

In dieser Position kann nun das Vorfixieren des Kaschierstoffes durch Ausbilden einer haftenden Verbindung zwischen dem Kaschierstoff und der Bauteiloberfläche beendet werden. Dabei wird vorteilhaft eine Klebeschicht, die vor dem ersten Verfahrensschritt bereits entweder auf der zu kaschierenden Bauteiloberfläche oder auf der Rückseite des Kaschierstoffes aufgebracht wurde, aktiviert. Als Klebeschicht wird bevorzugt ein sogenannter Hot-Melt oder eine wasserlösliche Dispersion aufgebracht, dessen Klebewirkung erst durch Aufbringen von Wärme aktiviert wird, was im vorliegenden Fall beispielsweise durch Behandeln mit einem Föhn erfolgen kann. Danach ist der Kaschierstoff auf der Bauteiloberfläche vorfixiert und das Bauteil kann anschließend in dem eigentlichen Kaschierschritt fertiggestellt werden. Zur Aktivierung der Klebeschicht kann auch jede andere geeignete Wärmebehandlung eingesetzt werden.

Bei allen drei Figuren ist zu erkennen, dass die Grundplatte 6 und die mit den Bezugszeichen 7 bis 14 bezeichneten Teile der erfindungsgemäßen Vorrichtung miteinander zu einer Baueinheit verbunden sind, die in einer bevorzugten Ausgestaltung der vorliegenden Erfindung in ihrer Gesamtheit schwenk- und höhenverstellbar ausgeführt ist.

### Bezugszeichenliste

- 1: Schwenkarm
- 2: Nahtschwert
- 3: Schaltgriff
- 4: Bauteil
- 5: Bauteilaufnahme
- 6: Grundplatte
- 7: Ständer
- 8: Ausleger
- 9: Spannzylinder
- 10: Spannarm
- 11: Halter
- 12: Schwenkzylinder
- 13: Lagerwelle
- 14: Lagerung

## Patentansprüche

1. Verfahren zum Vorfixieren eines Kaschierstoffes auf mindestens einem Oberflächenabschnitt eines auf einer Bauteilaufnahme (5) angeordneten Bauteils (4), insbesondere eines Innenverkleidungsbauteils für ein Kraftfahrzeug, mit den Schritten:
a) Auflegen und Grobausrichten des zugeschnittenen Kaschierstoffes auf dem mindestens einen Oberflächenabschnitt des Bauteils (4), wobei zwischen dem Kaschierstoff und der Bauteiloberfläche eine nicht aktivierte Klebeschicht vorgesehen ist;
b) Aufbringen eines Nahtschwertes (2) auf den Kaschierstoffes und Andrücken des Kaschierstoffes mit Hilfe des Nahtschwertes (2) unter geringem Anpressdruck, so dass ein Verschieben des Kaschierstoffes möglich ist;
c) Feinausrichten des Kaschierstoffes;
d) Spannen des Kaschierstoffes auf dem mindestens einen Oberflächenabschnitt; und
e) Vorfixieren des Kaschierstoffes durch Ausbilden einer haftenden Verbindung zwischen dem Kaschierstoff und der Bauteiloberfläche durch Aktivieren der Klebeschicht,
wobei das Nahtschwert (2) in Schritt a) versetzt von der Bauteilaufnahme (5) angeordnet ist und in Schritt b) mit einer Schwenkbewegung mittels eines versetzt von der Bauteilaufnahme (5) angeordneten Schwenkarms (1) auf den auf dem Oberflächenabschnitt aufliegenden Kaschierstoff aufgebracht wird, wobei das Spannen des Kaschierstoffes in Schritt d) durch Erhöhen des Anpressdruckes des Nahtschwertes (2) erfolgt.

2. Verfahren nach Anspruch 1,
**dadurch gekennzeichnet, dass** ein Kaschierstoff mit oder ohne Naht ausgewählt aus der Gruppe Leder, Kunststofffolie, Gewebe, Textil und Kunstleder eingesetzt wird.

3. Verfahren nach Anspruch 1 oder 2,
**dadurch gekennzeichnet, dass** die Aktivierung der Klebeschicht durch Wärmezufuhr erfolgt, wobei als Klebeschicht ein durch Wärme aktivierbarer Kleber vorgesehen ist, der vor dem Auflegen des Kaschierstoffes auf den mindestens einen Oberflächenabschnitt des Bauteils (4) entweder auf die Oberfläche des Bauteils (4) oder die Rückseite des Kaschierstoffes aufgebracht wird.

4. Vorrichtung zum Vorfixieren eines Kaschierstoffes auf mindestens einem Oberflächenabschnitt eines auf einer Bauteilaufnahme (5) angeordneten Bauteils (4), insbesondere eines Innenverkleidungsbauteils für ein Kraftfahrzeug, wobei die Vorrichtung eine auf einer Grundplatte (6) angeordnete Bauteilaufnahme (5), ein mit Druck belegbares Nahtschwert (2) sowie Mittel zum Aufbringen des Nahtschwertes (2) auf den auf dem Bauteil (4) aufliegenden Kaschierstoff umfasst,
**dadurch gekennzeichnet, dass** die Mittel zum Aufbringen des Nahtschwertes (2) auf den auf dem Bauteil (4) aufliegenden Kaschierstoff einen versetzt von der Bauteilaufnahme (5) angeordneten Schwenkarm (1) umfassen, an dem das Nahtschwert (2) angeordnet ist, wobei das Nahtschwert (2) mit einer Schwenkbewegung auf den auf dem Bauteil (4) aufliegenden Kaschierstoff aufbringbar und dabei mit unterschiedlichen Druckstufen belegbar ist.

5. Vorrichtung nach Anspruch 4,
**dadurch gekennzeichnet, dass** die Mittel zum Aufbringen des Nahtschwertes (2) auf den Kaschierstoff einen versetzt von der Bauteilaufnahme (5) auf der Grundplatte (6) angeordneten Ständer (7) umfassen, wobei der Schwenkarm (1) über eine in einer Lagerung (14) gelagerte Lagerwelle (13) schwenkbar an dem Ständer (7) angeordnet ist.

6. Vorrichtung nach Anspruch 4 oder 5,
**dadurch gekennzeichnet, dass** die Mittel zum Aufbringen des Nahtschwertes (2) auf den Kaschierstoff einen an einem über einen Ausleger (8) mit der Grundplatte (6) verbundenem Halter (11) angeordneten Schwenkzylinder (12) umfassen, wobei der Schwenkzylinder (12) mit dem Schwenkarm (1) in Wirkverbindung steht.

7. Vorrichtung nach einem der Ansprüche 4 bis 6,
**dadurch gekennzeichnet, dass** an dem Halter (11) Mittel zum Spannen des Kaschierstoffes vorgesehen sind, wobei die Mittel zum Spannen des Kaschierstoffes einen Spannzylinder (9) und einen Spannarm (10) umfassen, wobei der Spannzylinder (9) und der Spannarm (10) beim Spannen des Kaschierstoffes in Wirkverbindung mit dem Nahtschwert (2) sind.

8. Vorrichtung nach einem der Ansprüche 4 bis 7,
**dadurch gekennzeichnet, dass** am Nahtschwert (2) ein Schaltgriff (3) zur Aktivierung der Mittel zum Spannen des Kaschierstoffes vorgesehen ist.

9. Vorrichtung nach einem der Ansprüche 4 bis 8,
**dadurch gekennzeichnet, dass** die Grundplatte (6) und der Ständer (7), der Ausleger (8), der Spannzylinder (9), der Spannarm (10), der Halter (11), der Schwenkzylinder (12), die Lagerwelle (13) und die Lagerung (14) miteinander zu einer Baueinheit verbunden sind, wobei die gesamte Baueinheit schwenk- und höhenverstellbar ausgeführt ist.

## Claims

1. A method of pre-fixing a laminated fabric to at least one surface portion of a component (4), in particular an inner lining component for a motor vehicle, arranged on a component-receiving means (5) with the steps:
a) laying and roughly orientating the laminated fabric cut to size on the at least one surface portion of the component (4), wherein a non-activated adhesive layer is provided between the laminated fabric and the surface of the component;
b) applying a seam blade (2) to the laminated fabric and pressing the laminated fabric on under slight contact pressure with the aid of the seam blade (2), so that a displacement of the laminated fabric is possible;
c) finely orientating the laminated fabric;
d) tensioning the laminated fabric on the at least one surface portion, and
e) pre-fixing the laminated fabric by forming an adhesive join between the laminated fabric and the surface of the component by activating the adhesive layer,
wherein the seam blade (2) in step a) is arranged offset from the component-receiving means (5), and in step b) is applied - with a pivoting movement by means of a pivot arm (1) arranged offset from the component-receiving means (5) - to the laminated fabric resting on the surface portion, wherein the tensioning of the laminated fabric in step d) is carried out by increasing the contact pressure of the seam blade (2).

2. A method according to claim 1, **characterized in that** a laminated fabric with or without a seam is selected from the group of leather, plastics material film, fabrics, textiles and artificial leather.

3. A method according to claim 1 or 2, **characterized in that** the activation of the laminated fabric is carried out by the supply of heat, wherein the adhesive layer provided is in the form of an adhesive which is capable of being activated by heat and which is applied either to the surface of the component (4) or to the rear side of the laminated fabric before the laminated fabric is laid on the at least one surface portion of the component (4).

4. An apparatus for pre-fixing a laminated fabric to at least one surface portion of a component (4) arranged on a component-receiving means (5), in particular an inner lining component for a motor vehicle, wherein the apparatus comprises a component-receiving means (5) arranged on a base plate (6), a seam blade (2) capable of being covered under pressure and means for applying the seam blade (2) to the laminated fabric resting on the component (4), **characterized in that** the means for applying the seam blade (2) to the laminated fabric resting on the component (4) comprise a pivot arm (1) which is arranged on the component-receiving means (5) and on which the seam blade (2) is arranged, wherein the seam blade (2) is capable of being applied with a pivoting movement to the laminated fabric resting on the component (4) and is capable of being covered at different pressure stages in this case.

5. An apparatus according to claim 4, **characterized in that** the means for applying the seam blade (2) to the laminated fabric comprise a stand (7) arranged offset from the component-receiving means (5) on the base plate (6), wherein the pivot arm (1) is arranged on the stand (7) so as to be pivotable by way of a bearing shaft (13) mounted in a mounting (14).

6. An apparatus according to claim 4 or 5, **characterized in that** the means for applying the seam blade (2) to the laminated fabric comprise a pivoting cylinder (12) arranged on a holding means (11) connected to the base plate (6) by way of an arm (8), wherein the pivoting cylinder (12) is operatively connected to the pivot arm (1).

7. An apparatus according to any one of claims 4 to 6, **characterized in that** means for tensioning the laminated fabric are provided on the holding means (11), wherein the means for tensioning the laminated fabric comprise a tensioning cylinder (9) and a tensioning arm (10), wherein the tensioning cylinder (9) and the tensioning arm (10) are operatively connected to the seam blade (2) during the tensioning of the laminated fabric.

8. An apparatus according to any one of claims 4 to 7, **characterized in that** a shift handle (3) for activating the means for tensioning the laminated fabric is provided on the seam blade (2).

9. An apparatus according to any one of claims 4 to 8, **characterized in that** the base plate (6) and the stand (7), the arm (8), the tensioning cylinder (9), the tensioning arm (10), the holding means (11), the pivoting cylinder (12), the bearing shaft (13) and the mounting (14) are connected to one another to form a structural unit, wherein the entire structural unit is made pivotable and vertically adjustable.

## Revendications

1. Procédé de préfixation d'une matière à contre-coller sur au moins un tronçon de la surface d'un composant (4) positionné sur un élément de réception (5) de ce composant, en particulier d'un composant d'habillage interne d'un véhicule automatique, comportant les étapes consistant à :
a) positionner et orienter de façon grossière la matière à contre-coller découpée sur le tronçon de la surface du composant (4), une couche d'adhésif non activée étant positionnée entre la matière à contre-coller et la surface du composant,
b) appliquer une semelle de soudure (2) sur la matière à contre-coller et serrer la matière à contre-coller à l'aide de la semelle de soudure (2) avec une faible force de serrage de sorte qu'un déplacement de la matière à contre-coller soit possible,
c) orienter précisément la matière à contre-coller,
d) serrer la matière à contre-coller sur le tronçon de surface, et
e) préfixer la matière à contre-coller en réalisant une liaison par adhésion entre la matière à contre-coller et la surface du composant par activation de la couche d'adhésif,
selon lequel
la semelle de soudure (2) est positionnée dans l'étape a), décalée par rapport à l'élément de réception du composant (5) et est transférée dans l'étape b) par un mouvement de pivotement au moyen d'un bras pivotant (1) décalé par rapport à l'élément de réception du composant (5) sur la matière à contre-coller appliquée sur le tronçon de surface, le serrage de la matière à contre-coller étant effectué dans l'étape d) par augmentation de la force de serrage de la semelle de soudure (2).

2. Procédé conforme à la revendication 1,
**caractérisé en ce qu'**
on utilise une matière à contre-coller avec ou sans soudure choisie dans le groupe constitué par le cuir, les films de matériau synthétique, les tissus, les textiles et le cuir synthétique.

3. Procédé conforme à la revendication 1 ou 2,
**caractérisé en ce que**
l'activation de la couche d'adhésif est effectuée par apport de chaleur, la couche d'adhésif étant constituée par un adhésif activable sous l'action de la chaleur qui est appliqué avant le positionnement de la matière à contre-coller sur le tronçon de surface du composant (4) soit sur la surface de ce composant (4) soit sur la face arrière de la matière à contre-coller.

4. Dispositif de préfixation d'une matière à contre-coller sur au moins un tronçon de la surface d'un composant (4) positionné sur un élément de réception (5) de ce composant, en particulier d'un composant d'habillage interne d'un véhicule automobile, ce dispositif comprenant un élément de réception (5) du composant monté sur une plaque de base (6), une semelle de soudure (2) sur laquelle peut être exercée une pression et des moyens permettant d'appliquer la semelle de soudure (2) sur la matière à contre-coller positionnée sur le composant (4),
**caractérisé en ce que**
les moyens permettant d'appliquer la semelle de soudure (2) sur la matière à contre-coller positionnée sur le composant (4) comportent un bras pivotant (1) décalé par rapport à l'élément de réception (5) du composant (4), sur lequel est monté la semelle de soudure (2), la semelle de soudure (2) pouvant être appliquée par pivotement sur la matière à contre-coller appliquée sur le composant (4), et pouvant y subir différentes étapes de serrage.

5. Dispositif conforme à la revendication 4,
**caractérisé en ce que**
les moyens permettant d'appliquer la semelle de soudure (2) sur la matière à contre-coller comportent un montant support (7) monté sur la plaque de base (6) en étant décalé par rapport à l'élément de réception (5) du composant, le bras pivotant (1) étant monté pivotant sur le montant support (7) par l'intermédiaire d'un arbre palier (13) monté dans un palier (14).

6. Dispositif conforme à la revendication 4 ou 5,
**caractérisé en ce que**
les moyens permettant d'appliquer la semelle de soudure (2) sur la matière à contre-coller comportent un cylindre pivotant (12) monté sur un élément d'appui (11) relié à la plaque de base (6) par une flèche (8), le cylindre pivotant (12) étant en liaison fonctionnelle avec le bras pivotant (1).

7. Dispositif conforme à l'une des revendications 4 à 6,
**caractérisé en ce que**
sur l'élément d'appui (11) sont prévus des moyens permettant de serrer la matière à contre-coller, ces moyens permettant de serrer la matière à contre-coller comprenant un cylindre de serrage (9) et un bras de serrage (10), le cylindre de serrage (9) et le bras de serrage (10) étant en liaison fonctionnelle avec la semelle de soudure (2) lors du serrage de la matière à contre-coller.

8. Dispositif conforme à l'une des revendications 4 à 7,
**caractérisé en ce que**
sur la semelle de soudure (2) est montée une manette de commutation (3) permettant d'activer les moyens de serrage de la matière à contre-coller.

9. Dispositif conforme à l'une des revendications 4 à 8,
**caractérisé en ce que**
la plaque de base (6) et le montant support (7), la flèche (8), le cylindre de serrage (9), le bras de serrage (10), l'élément d'appui (11), le cylindre pivotant (12), l'arbre à palier (13) et le palier (14) sont reliés entre eux en une unité de construction, la totalité de cette unité de construction étant réalisée réglable en pivotement et en hauteur.
